# EUROPÄISCHE PATENTSCHRIFT

(11) **EP 0 487 777 B1**
(45) Veröffentlichungstag und Bekanntmachung des Hinweises auf die Patenterteilung: **08.03.1995**
(21) Anmeldenummer: 90122932.8
(22) Anmeldetag: 30.11.1990
(51) Int. Cl.: B29C 47/90

(54) **Kalibriereinheit mit integriertem Gelenk für einen Extruder für Kunststoffprofile**
Calibration unit with integral joint for a plastic elements extruder
Unité de calibrage avec articulation intégrée pour extrudeuse pour profilés en matière plastique

(43) Veröffentlichungstag der Anmeldung: 03.06.1992
(73) Patentinhaber: FRIEDRICH THEYSOHN GmbH, D-32547 Bad Oeynhausen (DE)
(72) Erfinder: Topf, Siegfried, A-4050 Traun (AT)
(74) Vertreter: Cohausz & Florack Patentanwälte

(56) Entgegenhaltungen:
- EP-A- 0 086 623
- EP-A- 0 207 064
- EP-A- 0 425 942
- DE-A- 2 412 818
- DE-A- 3 121 697
- US-A- 3 378 887

## Beschreibung

Die Erfindung bezieht sich auf eine Kalibriereinheit eines Extruders für Profile, die aus lösbar miteinander verbundenen inneren und äußeren Kaliberteilen zusammengesetzt ist.

Bei einer bekannten Kalibriereinheit (EP-A-0 207 064) dieser Art sind die einzeln gefertigten Kaliberteile durch Schraubverbindungen oder andere Verbindungsteile zusammengehalten. Ein wesentlicher Nachteil einer solchen Kalibriereinheit besteht darin, daß mit immer höheren Anforderungen an die Maßhaltigkeit die Positionierung der Einzelteile einen erheblichen Aufwand erfordert. Dieser Aufwand kann auch nicht dadurch wesentlich vermindert werden, daß manche Teile über Gelenkscharniere miteinander verbunden sind, denn auch diese Scharniere müssen beim Zusammenbau genau positioniert werden. Hinzu kommt, daß solche Scharniere einen nicht unerheblichen fertigungstechnischen und montagetechnischen Aufwand erfordern und der konstruktiv bedingte Gelenkpunkt ungünstig liegt.

Der Erfindung liegt die Aufgabe zugrunde, eine Kalibriereinheit eines Extruders für Profile zu schaffen, dessen Teile problemlos mit hoher Maßhaltigkeit positioniert werden können.

Diese Aufgabe wird erfindungsgemäß dadurch gelöst, daß von den äußeren Kaliberteilen mindestens zwei Teile über ein integriertes Gelenk aufklappbar miteinander verbunden sind. Dabei sollte sich jedes integrierte Gelenk über die gesamte axiale Länge des Kalibers erstrecken.

Das oder die inneren Kaliberteile sind nach einer Ausgestaltung der Erfindung über eine axiale Kulissenführung lösbar miteinander verbunden.

Das oder die aufklappbaren äußeren Kaliberteile sollten an ihren dem beziehungsweise den Gelenken abgewandten Enden kulissenartig mit anderen Kaliberteilen verriegelbar sein.

Besonders hat sich bewährt, wenn die Kaliberteile durch Drahterosion aus einem spannungsfrei geglühten Werkstück in einem Arbeitsgang hergestellt sind.

Die besonderen Vorteile der Erfindung bestehen darin, daß beim An- bzw. Abfahren oder bei Störungen einer Extrusionslinie einfach und schnell die Kalibiereinheit geöffnet und geschlossen werden kann. Die integrierten Gelenke sorgen für eine hohe Maßhaltigkeit, ohne daß es notwendig ist, beim Schließen besondere Sorgfalt und Zeit zur Erzielung einer hohen Maßhaltigkeit aufzubringen. Deshalb eignet sich die erfindungsgemäße Kalibriereinheit für den automatischen Betrieb.

Im folgenden wird die Erfindung anhand einer ein Ausführungsbeispiel im Querschnitt darstellenden Zeichnung näher erläutert.

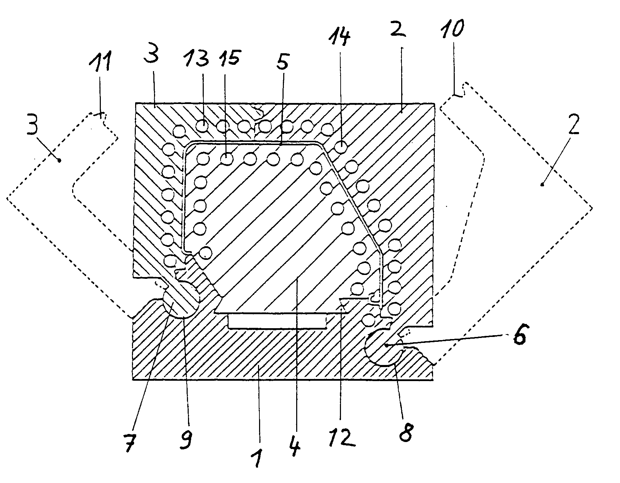

Die in der Zeichnung dargestellte Kalibriereinheit besteht aus drei äußeren Teilen 1-3 und einem inneren Teil 4, die im geschlossenen Zustand der Kalibriereinheit zueinander fest positioniert sind. Sie bilden zwischen sich einen Hohlraum 5 für das zu extrudierende Profil.

Die äußeren Teile 1-3 bestehen aus einem Sockel 1 und zwei daran gelenkig gehaltenen, aus der ausgezeichneten Lage in die strichpunktierte Lage aufklappbaren Seitenteilen 2,3. Die gelenkige Verbindung jedes dieser Seitenteile 2,3 besteht aus einem an einem Längsrand eines jeden Seitenteils 2,3 angeformten kreiszylindrischen Gelenkzapfen 6,7 und einer im Sockel 1 ausgebildeten kreiszylindrischen Lagerschale 8,9. An ihrem anderen Längsrand weisen die Seitenteile 2,3 eine kulissenartige Führung 10,11 auf, die im geschlossenen Zustand der Kalibrierung die beiden Seitenteile 2,3 miteinander verriegelt.

Das innere Teil 4 der Kalibriereinheit ist mit einer Schwalbenschwanzführung 12 auf dem Sockel 1 in der Normalebene zur Axialebene festgelegt. In axialer Richtung sind das Innenteil 4 wie die Seitenteile 2,3 gegenüber dem Sockel 1 mit nicht dargestellten Mitteln verriegelt.

Sowohl im Innenteil 4 als auch in den Seitenteilen 2,3 sind dem Hohlraum 5 benachbart axiale Vakuum- und/oder Kühlkanäle 13-15 ausgebildet.

Um zu einer toleranzarmen, sich aus verschiedenen Teilen zusammensetzenden Kalibriereinheit mit integrierten Gelenken zu kommen, werden die einzelnen Teile durch Drahterosion aus einem spannungsfrei geglühten Stahlblock hergestellt. Hierbei sind entsprechende Bahnsteuerungen für die Erstellung der Kreisquerschnitte der Gelenke notwendig.

## Patentansprüche

1. Kalibriereinheit eines Extruders für Profile, das aus lösbar miteinander verbundenen inneren und äußeren Kaliberteilen (1-4) zusammengesetzt ist,
**dadurch gekennzeichnet,** daß von den äußeren Kaliberteilen (1-3) mindestens zwei Teile (1,2 und/oder 1,3) über ein integriertes Gelenk (6,8 und/oder 7,9) miteinander verbunden sind.

2. Kalibriereinheit nach Anspruch 1,
**dadurch gekennzeichnet,** daß jedes integrierte Gelenk (6,8;7,9) sich über die gesamte axiale Länge der Kalibriereinheit erstreckt.

3. Kalibriereinheit nach Anspruch 1 oder 2,
**dadurch gekennzeichnet,** daß ein inneres Kaliberteil (4) über eine axiale Kulissenführung (12) lösbar mit einem anderen Kaliberteil (1) verbunden ist.

4. Kalibriereinheit nach einem der Ansprüche 1 bis 3,
**dadurch gekennzeichnet,** daß jedes aufklappbare Kaliberteil (2,3) an ihrem dem Gelenk (6,8 bzw. 7,9) abgewandten Ende kulissenartig mit einem anderen Kaliberteil (3 bzw. 2) verriegelbar ist.

5. Kalibriereinheit nach einem der Ansprüche 1 bis 4,
**dadurch gekennzeichnet,** daß die Kaliberteile (1-5) durch Drahterosion aus einem spannungsfrei geglühten Werkstück in einem Arbeitsgang hergestellt sind.

## Claims

1. A calibrating unit of an extruder for sections, which is made up of releasably interconnected inner and outer calibrating members (1-4), characterized in that of the outer calibrating members (1-3) at least two members (1, 2 and/or 1, 3) are interconnected via an integrated joint (6, 8 and/or 7, 9).

2. A calibrating unit according to claim 1, characterized in that each integrated joint (6, 8; 7, 9) extends over the whole axial length of the calibrating unit.

3. A calibrating unit according to claims 1 or 2, characterized in that an inner calibrating member (4) is releasably connected via an axial connecting link guide (12) to another calibrating member (1).

4. A calibrating unit according to one of claims 1 to 3, characterized in that at its end remote from the joint (6, 8; 7, 9) each calibrating member (2, 3) which can be hinged open can be locked after the fashion of a connecting link guide to another calibrating member (3; 2).

5. A calibrating unit according to one of claims 1 to 4, characterized in that the calibrating members (1-5) are produced in a single operation by wire erosion from a workpiece annealed tension-free.

## Revendications

1. Unité de calibrage d'une extrudeuse pour profilés, composée d'éléments de calibre intérieurs et extérieurs (1 à 4) reliés de façon démontable les une aux autres, caractérisée en ce qu'au moins deux éléments (1, 2 et/ou 1, 3) des éléments de calibre extérieurs (1 à 3) sont reliés l'une à l'autre par l'intermédiaire d'une articulation intégrée (6, 8 et/ou 7, 9).

2. Unité de calibrage selon la revendication 1, caracterisée en ce que chaque articulation intégrée (6, 8; 7, 9) s'étend sur toute la longueur axiale de l'unité de calibrage.

3. Unité de calibrage selon la revendication 1 ou 2, caracterisée en ce qu'un élément de calibre intérieur (4) est relié de façon démontable a un autre élément de calibre (1) par l'intermédiaire d'un guidage coulissant (12).

4. Unité de calibrage selon l'une des revendications 1 à 3, caractérisée en ce que chaque élément de calibre basculant (2, 3) peut étre verrouillé de façon coulissante sur un autre élément de calibre (3 ou 2), au niveau de son extrémité opposée à l'articulation (6, 8 ou 7, 9).

5. Unité de calibrage selon l'une des revendications 1 à 4, caractérisée en ce que les éléments de calibre (1 à 5) sont fabriqués par étincelage par fil en une seule opération à partir d'une pièce à usiner recuite exempte de contrainte.
